(19) Europäisches Patentamt / European Patent Office / Office européen des brevets

(11) **EP 3 664 493 B1**

(12) **EUROPEAN PATENT SPECIFICATION**

(45) Date of publication and mention
of the grant of the patent:
**13.07.2022  Bulletin 2022/28**

(21) Application number: **17921230.3**

(22) Date of filing: **11.08.2017**

(51) International Patent Classification (IPC):
**H04W 72/04** (2009.01)

(52) Cooperative Patent Classification (CPC):
**H04W 72/042; H04W 16/12;** H04W 72/0446

(86) International application number:
**PCT/CN2017/097230**

(87) International publication number:
**WO 2019/028887 (14.02.2019 Gazette 2019/07)**

(54) **RESOURCE CONFIGURATION METHOD, APPARATUS, AND STORAGE MEDIUM**

VERFAHREN UND VORRICHTUNG ZUR RESSOURCENKONFIGURATION SOWIE
SPEICHERMEDIUM

PROCÉDÉ ET APPAREIL DE CONFIGURATION DE RESSOURCES, ET SUPPORT
D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.06.2020  Bulletin 2020/24**

(73) Proprietor: **Huawei Technologies Co., Ltd.
Longgang District
Shenzhen, Guangdong 518129 (CN)**

(72) Inventors:
- **JI, Tong
  Shenzhen
  Guangdong 518129 (CN)**
- **JIN, Zhe
  Shenzhen
  Guangdong 518129 (CN)**
- **CHEN, Zhe
  Shenzhen
  Guangdong 518129 (CN)**

(74) Representative: **Gill Jennings & Every LLP
The Broadgate Tower
20 Primrose Street
London EC2A 2ES (GB)**

(56) References cited:
**WO-A1-2017/074806     CN-A- 102 918 788**

- **HUAWEI ET AL: "On 'wake-up signal' for paging
  and connected-mode DRX", 3GPP DRAFT;
  R1-1707021, 3RD GENERATION PARTNERSHIP
  PROJECT (3GPP), MOBILE COMPETENCE
  CENTRE ; 650, ROUTE DES LUCIOLES ; F-06921
  SOPHIA-ANTIPOLIS CEDEX ; FRANCE , vol. RAN
  WG1, no. Hangzhou, China; 20170515 - 20170519
  14 May 2017 (2017-05-14), XP051272251,
  Retrieved from the Internet:
  URL:http://www.3gpp.org/ftp/Meetings_3GPP_
  SYNC/RAN1/Docs/ [retrieved on 2017-05-14]**
- **QUALCOMM INCORPORATED: "OTDOA
  positioning reference signal", 3GPP DRAFT;
  R1-1702547 OTDOA POSITIONING REFERENCE
  SIGNAL, 3RD GENERATION PARTNERSHIP
  PROJECT (3GPP), MOBILE COMPETENCE
  CENTRE ; 650, ROUTE DES LUCIOLES ; F-06921
  SOPHIA-ANTIPOLIS CEDEX ; FRANCE , vol. RAN
  WG1, no. Athens, Greece; 20170213 - 20170217
  12 February 2017 (2017-02-12), XP051209701,
  Retrieved from the Internet:
  URL:http://www.3gpp.org/ftp/Meetings_3GPP_
  SYNC/RAN1/Docs/ [retrieved on 2017-02-12]**
- **HUAWEI et al.: "on 'Wake-Up Signal' for Paging
  and Connected-Mode DRX", 3GPPTSG RAN WG1
  Meeting #89 R1-1707021, 19 May 2017
  (2017-05-19), XP051272251,**

## Description

## TECHNICAL FIELD

This application relates to communications technologies, and in particular, to a resource configuration technology.

## BACKGROUND

With development of communications technologies, a narrowband internet of things (Narrow Band Internet of Things, NB-IoT) technology emerges. In the NB-IoT, downlink data or a control signal may be transmitted across subframes. The NB-IoT supports three deployment modes: an in-band (In-Band) carrier, a guard band (Guard Band) carrier, and a stand-alone (Stand-alone) carrier. In the in-band deployment mode, because some subframes have already been occupied by signals in another system, for example, a long term evolution multicast broadcast single frequency network (Long Term Evolution Multicast Broadcast Single Frequency Network, LTE MBSFN) subframe, downlink data or a control signal in the NB-IoT cannot be transmitted in these subframes. To prevent the terminal device from unsuccessfully receiving downlink data or a control signal due to subframe misalignment, a network device indicates a specific unavailable subframe to the terminal device. In other words, the network device indicates a specific invalid (invalid) subframe to the terminal device.

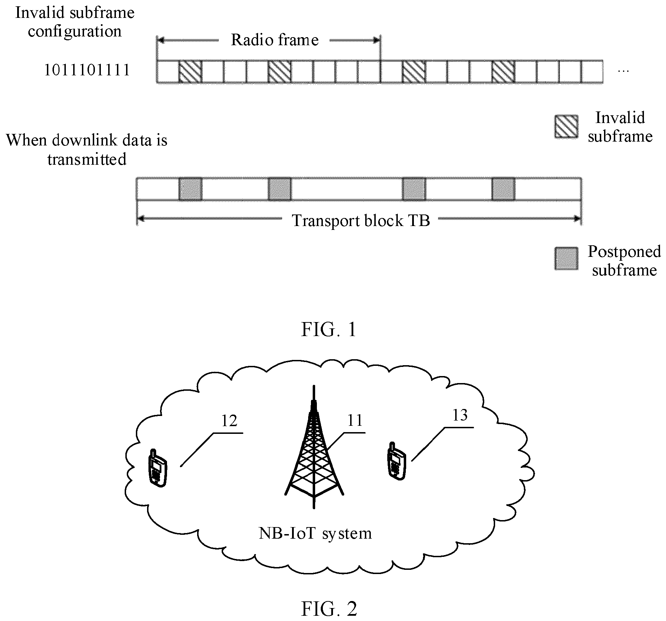

An invalid subframe is indicated in a system message of the NB-IoT, and the network device indicates the invalid subframe in a bitmap (bitmap) manner. Specifically, the network device indicates, based on a quantity of subframes included in an invalid subframe configuration period, a specific invalid subframe by using a bitmap having a same quantity of bits as the quantity of subframes included in the invalid subframe configuration period, and sends the bitmap to the terminal device. For example, when the invalid subframe configuration period is 10 ms, the network device indicates a specific invalid subframe by using a 10-bit bitmap. When the invalid subframe configuration period is 40 ms, the network device indicates a specific invalid subframe by using a 40-bit bitmap. In the bitmap, if a bit 0 indicates that a subframe corresponding to the bit is an invalid subframe, and a bit 1 indicates that a subframe corresponding to the bit is a subframe in which downlink data or a control signal is transmitted, a bitmap in a form of 1011101111 indicates that the second subframe and the sixth subframe in a radio frame are invalid subframes. Certainly, an example in which 0 represents an invalid subframe and 1 represents a subframe in which downlink data or a control signal is transmitted is merely used for description herein. It can be understood that 1 may alternatively represent an invalid subframe and 0 may alternatively represent a subframe in which downlink data or a control signal is transmitted. The terminal device determines a specific invalid subframe based on the bitmap sent by the network device. When receiving the downlink data or the control signal, the terminal device postpones (postpone) an invalid subframe. FIG. 1 is a schematic diagram of an invalid subframe that is configured by a network device and that is postponed by a terminal device. As shown in FIG. 1, an invalid subframe configuration period is 10 ms, and the second subframe and the sixth subframe in a radio frame are invalid subframes. A bitmap configured by the network device is 1011101111. When receiving downlink data or a control signal, the terminal device postpones the second subframe and the sixth subframe in the radio frame. This ensures that the downlink data or the control signal can be successfully received.

With development of the NB-IoT, a new common channel or a new common signal (referred to as a new common signal below for ease of description) is introduced into an NB-IoT system. The common signal can be received by only some terminal devices, and some other terminal devices do not need to receive the common signal. Currently, in the NB-IoT system, a resource for transmitting the new common signal is not stipulated. In other words, the new common signal may be transmitted in any subframe. This causes subframe misalignment when a terminal device that does not need to receive the new common signal receives the downlink data or the control signal, and consequently such a terminal device fails to receive the downlink data or the control signal.

Publication by HUAWEI ET AL, "On 'wake-up signal' for paging and connected-mode DRX", R1-1707021 discusses transmission of 'wake-up signal' for paging and connected-mode DRX. Publication by QUALCOMM INCORPORATED, "OTDOA positioning reference signal", R1-1702547 discusses OTDOA positioning reference signal.

## SUMMARY

The reader is referred to the appended independent claims. Some preferred features are laid out in the dependent claims.

## BRIEF DESCRIPTION OF DRAWINGS

FIG. 1 is a schematic diagram of an invalid subframe configured by a network device and postponed by a terminal device;
FIG. 2 is a schematic diagram of an application scenario according to this application;
FIG. 3 is a signaling interaction diagram of example of a resource configuration method according to this application;
FIG. 4 is a signaling interaction diagram of example of a resource configuration method according to this application;

FIG. 5A is a schematic diagram of an implementation of the indication information in the example in FIG. 4;
FIG. 5B is a schematic diagram of an application scenario of the indication information in FIG. 5A;
FIG. 5C is a schematic diagram of another implementation of the indication information in the example in FIG. 4;
FIG. 5D is a schematic diagram of still another implementation of the indication information in the example in FIG. 4;
FIG. 5E is a schematic diagram of yet another implementation of the indication information in the example in FIG. 4;
FIG. 6 is a schematic structural diagram of Embodiment 1 of a network device according to this application;
FIG. 7 is a schematic structural diagram of an example of a network device not claimed in this application;
FIG. 8 is a schematic structural diagram of Embodiment 1 of a terminal device according to this application;
FIG. 9 is a schematic structural diagram of example of a terminal device not claimed in this application; and
FIG. 10 is a schematic structural diagram of a communications system according to this application.

**DESCRIPTION**

The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.

A resource configuration method provided in this application is applied to a communications system including a network device and a terminal device. Optionally, the communications system may be an NB-IoT system in a Long Term Evolution (Long Term Evolution, LTE) system. FIG. 2 is a schematic diagram of an application scenario of a resource configuration method embodiment according to this application. As shown in FIG. 2, an NB-IoT system includes a network device 11, a terminal device 12, and a terminal device 13. With development of an NB-IoT, a new common channel or a new common signal is introduced into the NB-IoT system. For ease of description, the new common channel or the new common signal is referred to as a first signal. The network device 11 sends the first signal to terminal devices. Some terminal devices need to receive the first signal. It is assumed that the terminal device 12 needs to receive the first signal. Some other terminal devices do not need to receive the first signal. It is assumed that the terminal device 13 does not need to receive the first signal. To enable the terminal device 12 to correctly receive the first signal without affecting normal reception of other downlink data by the terminal device 13, it is very important for the network device 11 to send the first signal at a specific resource location.

This application provides a resource configuration method, to resolve the foregoing problem. According to the resource configuration method provided in this application, a network device generates a first signal, and the network device sends the first signal to a terminal device at a target resource location. The target resource location includes at least one subframe, and the at least one subframe is an invalid subframe. The terminal device determines the target resource location, and the terminal device receives the first signal sent by the network device at the target resource location. Therefore, the network device sends the first signal in an invalid subframe. Based on a mechanism of the invalid subframe, a terminal device that does not need to receive the first signal may postpone the invalid subframe, and a terminal device that needs to receive the first signal may receive the first signal in the invalid subframe. In this way, no subframe misalignment occurs when the terminal device that does not need to receive the first signal receives downlink data or a control signal, and therefore the terminal device can successfully receive the downlink data or the control signal. In addition, the terminal device that needs to receive the first signal can successfully receive the first signal at the target resource location.

Specific embodiments are used below to describe in detail the technical solutions of this application. The following several specific embodiments may be combined with each other, and a same or similar concept or process may not be described repeatedly in some embodiments.

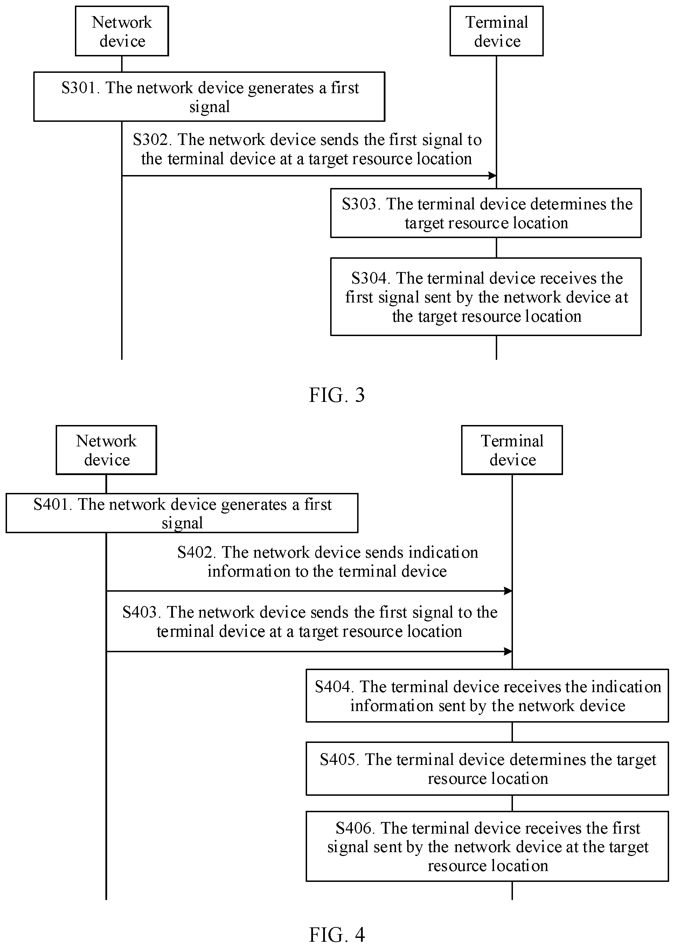

FIG. 3 is a signaling interaction diagram of a resource configuration method according to this application. As shown in FIG. 3, the resource configuration method provided in this application includes the following steps.

S301: A network device generates a first signal.

Specifically, the network device in this application may be an access network device in an NB-IoT system, for example, a base station.

The first signal in this application is a newly introduced common channel or signal. The first signal is used to indicate at least one of the following cases: a paging status of a terminal device, a change status of a system message, and a scheduling status of the terminal device.

When the first signal is used to indicate the paging status of the terminal device, the first signal is referred to as a wake-up signal (wake-up signal). The wake-up signal may help the terminal device pertinently listen to a paging signal, to reduce power consumption of the terminal device. The wake-up signal is a signal newly introduced into Release 15 (Release 15, Rel-15) NB-IoT. A terminal device in Rel-15 needs to receive the wake-up signal. However, a terminal device in an earlier release, for example, a terminal device in Rel-13 or Rel-14, does not need to receive the wake-up signal.

The network device may generate the first signal on a proper occasion. For example, the network device generates the first signal when the paging status of the terminal device needs to be indicated, or the change status of the system message needs to be indicated, or the scheduling status of the terminal device needs to be indicated.

S302: The network device sends the first signal to the terminal device at a target resource location.

The target resource location includes at least one subframe, and the at least one subframe is an invalid subframe.

Specifically, in this application, the target resource location includes an invalid subframe. To be specific, the network device sends the first signal to the terminal device in the invalid subframe.

S303: The terminal device determines the target resource location.

Specifically, the terminal device in this application is a device that provides a user with voice and/or data connectivity, a handheld device having a wireless connection function, or another processing device connected to a wireless modem. A wireless terminal may communicate with one or more core networks through a radio access network (Radio Access Network, RAN). The wireless terminal may be a mobile terminal, such as a mobile phone (or referred to as a "cellular" phone) or a computer with a mobile terminal. For example, the wireless terminal may be a portable, pocketsized, handheld, or computer built-in mobile apparatus, or an in-vehicle mobile apparatus, which exchanges voice and/or data with the radio access network. For example, the wireless terminal may be a device such as a personal communications service (PCS, Personal Communication Service) phone, a cordless telephone set, a session initiation protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The terminal device in this application is a terminal device that needs to receive the first signal, namely, a terminal device in a current release. The terminal device may determine the target resource location based on indication information sent by the network device, or the terminal device determines the target resource location according to a rule agreed between the terminal device and the network device.

When the terminal device determines the target resource location according to the rule agreed between the terminal device and the network device, the terminal device determines according to a determining rule pre-agreed between the terminal device and the network device, at least one invalid subframe configuration period in which the target resource location is located, and then the terminal device determines, according to another rule pre-agreed between the terminal device and the network device, a subframe included in the target resource location in the at least one invalid subframe configuration period. Alternatively, after determining, according to the determining rule, the at least one invalid subframe configuration period in which the target resource location is located, the terminal device may determine, according to a default solution agreed between the terminal device and the network device, a subframe included in the target resource location in the at least one invalid subframe configuration period.

The invalid subframe configuration period includes a positive integer quantity of radio frames, and different invalid subframe configuration periods have a same invalid subframe configuration. Optionally, the invalid subframe configuration period may be 10 ms, 40 ms, or the like. That different invalid subframe configuration periods have a same invalid subframe configuration means that invalid subframes have a same location in each invalid subframe configuration period. For example, if the invalid subframe configuration period is 10 ms, and the first subframe and the fourth subframe are invalid subframes in a first invalid subframe configuration period, the first subframe and the fourth subframe are invalid subframes in all other invalid subframe configuration periods other than the first invalid subframe configuration period.

S304: The terminal device receives the first signal sent by the network device at the target resource location.

Specifically, after receiving the first signal at the target resource location, the terminal device may perform a subsequent step based on different functions of the first signal. For example, when the first signal is a wake-up signal, after the terminal device receives the first signal, the terminal device determines, based on the first signal, an occasion for listening to a paging signal.

In this application, for the terminal device in an earlier release, because the terminal device does not need to receive the first signal, and the target resource location is an invalid subframe, such a terminal device may postpone the target resource location, to avoid subframe misalignment. For the terminal device in an earlier version, the network device sends the first signal in this manner, so that downlink resource fragmentation of the terminal device in an earlier version can be avoided, and resource utilization can be improved. A reason is as follows: If the network device does not send the first signal in such a manner, the network device can transmit downlink data or a control signal of the terminal device in an earlier version only on a resource between two adjacent first signals. This causes downlink resource fragmentation, and reduces resource utilization.

According to the resource configuration method provided in this application, the network device generates the first signal, and the network device sends the first signal to the terminal device at the target resource location. The target resource location includes the at least one subframe, and the at least one subframe is the invalid subframe. The terminal device determines the target resource location, and the terminal device receives the first signal sent by the network device at the target resource location. Therefore, the network device sends the first signal in the invalid subframe. Based on a mechanism of the invalid subframe, a terminal device that does not need to receive the first signal may postpone the invalid subframe, and a terminal device that needs to receive the first signal may receive the first signal in the invalid subframe. In this way, no subframe misalignment occurs when the terminal device that does not need to receive the first signal receives the downlink data or the control signal, and therefore the terminal device can successfully receive the downlink data or the control signal. In addition, the terminal device that needs to receive the first signal can successfully receive the first signal at the target resource location.

FIG. 4 is a signaling interaction diagram of an example of a resource configuration method. According to the example in FIG. 3, a step performed before a network device sends a first signal to a terminal device at a target resource location is described in detail in this example. As shown in FIG. 4, the resource configuration method provided in this application includes the following steps.

S401: A network device generates a first signal.

Implementation processes and technical principles of S401 and S301 are similar. Details are not described herein again.

S402: The network device sends indication information to a terminal device.

The indication information is used to indicate the target resource location.

Specifically, in a first implementation, the indication information is specifically used to indicate a subframe included at the target resource location in at least one invalid subframe configuration period. The invalid subframe configuration period includes a positive integer quantity of radio frames, and different invalid subframe configuration periods have the same invalid subframe configuration.

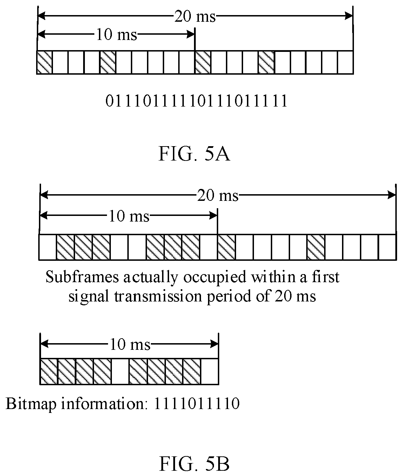

In a specific application scenario of the first implementation, the invalid subframe configuration period is greater than or equal to a sending period of the first signal. FIG. 5A is a schematic diagram of an implementation of indication information in the example in FIG. 4. As shown in FIG. 5A, if an invalid subframe configuration period is 20 ms, a sending period of the first signal is 10 ms, and the first signal is transmitted in a first subframe and a fifth subframe that are in a radio frame, in an invalid subframe configuration period, subframes included at the target resource location are shown in shadow parts in FIG. 5A. The network device may indicate, to the terminal device by using bitmap information, a subframe included at the target resource location in at least one invalid subframe configuration period. If 0 indicates an invalid subframe, and 1 indicates a subframe in which downlink data or a control signal is transmitted, indication information corresponding to FIG. 5A is 01110111110111011111.

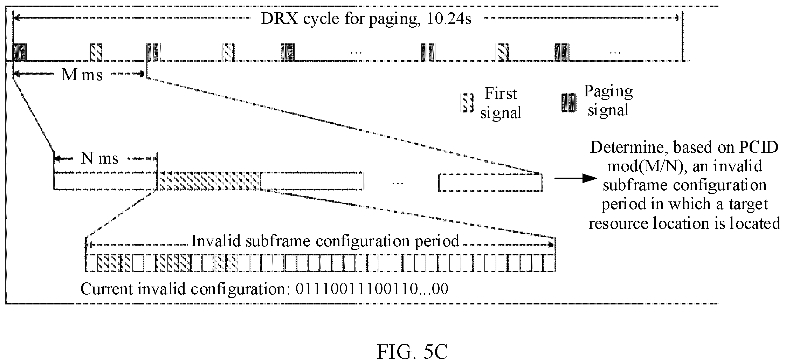

In another specific application scenario of the first implementation, the network device determines according to a determining rule pre-agreed between the network device and the terminal device, at least one invalid subframe configuration period in which the target resource location is located. This application scenario is applicable to a case in which an invalid subframe configuration period is shorter than a sending period of the first signal. The determining rule may be determined based on an identifier of a cell in which the terminal device is located. More specifically, the determining rule may be determined based on the identifier of the cell in which the terminal device is located, the sending period of the first signal, and the invalid subframe configuration period. For example, the determining rule may be PCID mod(M/N), PCID is the identifier of the cell in which the terminal device is located, M is the sending period of the first signal, N is the invalid subframe configuration period, and both M and N are positive integers. In other words, M is a quantity of subframes or a quantity of frames that are included in the sending period of the first signal, N may be a quantity of subframes, a quantity of frames or the like that are included in the invalid subframe configuration period. FIG. 5C is a schematic diagram of another implementation of the indication information in the example in FIG. 4. As shown in FIG. 5C, based on a determining rule, at least one invalid subframe configuration period in which a target resource location is located is determined from a plurality of invalid subframe configuration periods included in a sending period of a first signal.

In yet another specific application scenario of the first implementation, an invalid subframe configuration period is shorter than the sending period of the first signal. FIG. 5B is a schematic diagram of an application scenario of the indication information in FIG. 5A. As shown in FIG. 5B, a transmission period of the first signal is 20 ms, and the first signal is transmitted in a second subframe to a fourth subframe and a seventh subframe to a ninth subframe of a first radio frame, and is transmitted in a first subframe and a sixth subframe of a second radio frame. An invalid subframe configuration period is 10 ms. To ensure reliability of data received by a terminal device, bitmap information corresponding to a finally configured invalid subframe is 1111011110, that is, a first subframe to a fourth subframe and a sixth subframe to a ninth subframe of a radio frame are configured as invalid subframes. Consequently, a subframe in which downlink data or a control signal transmitted may be configured as the invalid subframe. This causes resource waste. Therefore, in the first implementation of the indication information, a defect exists when the invalid subframe configuration period is shorter than a sending period of the first signal. A second implementation described in detail below can overcome the defects.

In a second implementation, in addition to being used to indicate a subframe included at the target resource location in at least one invalid subframe configuration period, the indication information is further used to indicate whether the first signal is transmitted in the at least one invalid subframe configuration period.

In the second implementation, essentially, a two-level indication manner is used, to finally indicate the subframe included at the target resource location in the at least one invalid subframe configuration period. First, whether the first signal is transmitted in the at least one invalid subframe configuration period is indicated, that is, the invalid subframe configuration period in which the target resource location is located is indicated from a plurality of invalid subframe configuration periods included in the sending period of the first signal. Then, the subframe included at the target resource location is indicated in the invalid subframe configuration period in which the target resource location is located.

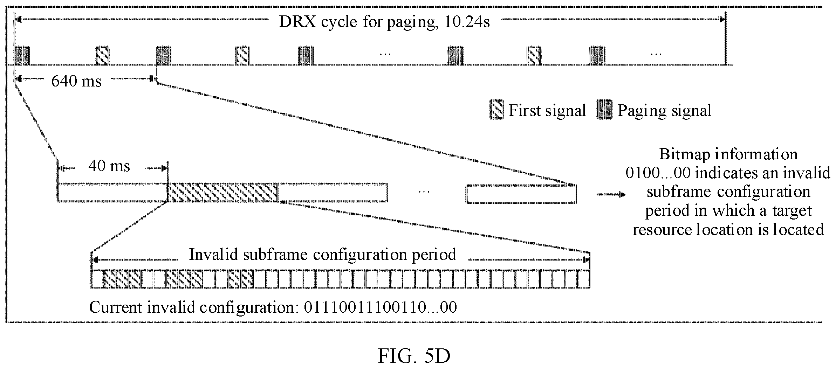

There are two specific implementations of indicating, from the plurality of invalid subframe configurations included in the sending period of the first signal, the invalid subframe configuration period in which the target resource location is located. In an implementation, the indication information includes bitmap information, and each bit in the bitmap information is used to indicate whether the first signal is transmitted in one invalid subframe configuration period. A quantity of bits in the bitmap information is an integer larger than or equal to an integer after M is divided by N. FIG. 5D is a schematic diagram of still another implementation of indication information in the example in FIG. 4. As shown in FIG. 5D, a sending period of the first signal is 640 ms, an invalid subframe configuration period is 40 ms, and the sending period of the first signal includes 16 invalid subframe configuration periods. Therefore, the bitmap information includes 16 bits, and each bit correspondingly indicates whether the first signal is transmitted in one invalid subframe configuration period. In FIG. 5D, the first signal is transmitted in a second subframe configuration period of the 16 invalid subframe configuration periods. If 1 is used to indicate that the first signal is transmitted in the invalid subframe configuration period, the bitmap information is 0100...00. In this implementation, it may be indicated that the first signal is transmitted in each of the plurality of invalid subframe configuration periods. In another implementation, the indication information includes indication signaling. The indication signaling is used to indicate a period number of the invalid subframe configuration period in which the target resource location in a first time range is located. The first signal is transmitted in a period corresponding to the period number. The indication signaling is a binary number. The quantity of bits x of the binary number may be determined based on a formula

$$2^X \geq \frac{M}{N}$$

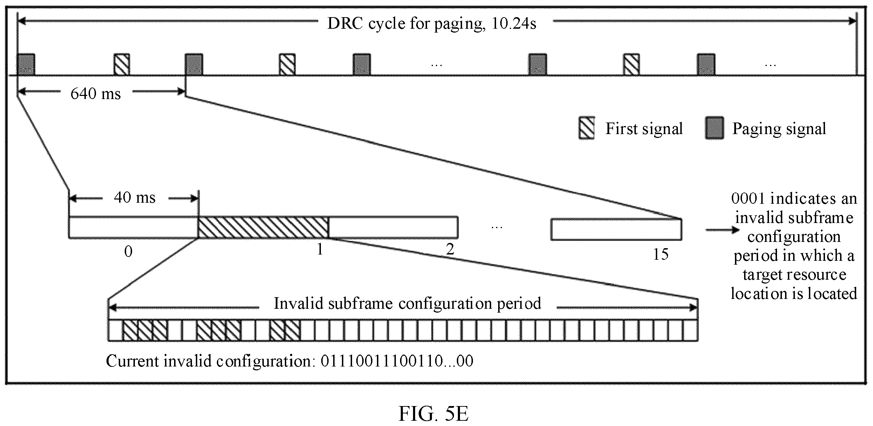

. In this implementation, the first time range may include a positive integer quantity of radio frames. The first time range includes the plurality of invalid subframe configuration periods, and each invalid subframe configuration period may be numbered based on a rule, for example, numbered in a time sequence. The number is referred to as a period number of the invalid subframe configuration period. Further, the first time range may be the sending period of the first signal. For example, the first time range may be 640 ms. FIG. 5E is a schematic diagram of yet another implementation of the indication information in the example in FIG. 4. As shown in FIG. 5E, the sending period of the first signal is 640 ms. The invalid subframe configuration period is 40 ms. The sending period of the first signal includes 16 invalid subframe configuration periods. Period numbers of the invalid subframe configuration periods are sequentially 0, 1, 2, ...15. It may be determined that a quantity of bits of a binary

$$2^X \geq \frac{M}{N}$$

number is 4 based on a formula . If the first signal is transmitted in the invalid subframe configuration period whose period number is 1, an indication signaling is 0001. It should be noted that compared with the previous implementation, in the latter implementation, the quantity of bits of the indication information can be reduced. This saves resources.

In the second implementation, the subframe included at the target resource location is indicated from the invalid subframe configuration period in which the target resource location is located. The subframe included at the target resource location may be indicated from the invalid subframe configuration period by using the current bitmap information.

In the second implementation, when the invalid subframe configuration period is less than the sending period of the first signal, the target resource location may be indicated more precisely. This avoids resource waste.

In a third implementation, that the indication information is used to indicate the target resource location includes any one of the following cases: the indication information is used to indicate a transmission period of the first signal; the indication information is used to indicate a resource offset of the first signal in the transmission period; or the indication information is used to indicate duration of the first signal in the transmission period. The target resource location may also be indicated by indicating the transmission period of the first signal, the resource offset of the first signal in the transmission period, or the duration of the first signal in the transmission period.

It should be noted that the first implementation and the third implementation may be used in combination. That is, in addition to indicating the subframe included at the target resource location in the at least one invalid subframe configuration period, the indication information is further used to indicate any one of the following information: the transmission period of the first signal; the resource offset of the first signal in the transmission period; and the duration of the first signal in the transmission period.

S403: The network device sends the first signal to the terminal device at the target resource location.

The target resource location includes at least one subframe, and the at least one subframe is the invalid subframe.

Implementation processes and technical principles of S403 and S302 are similar. Details are not described herein again.

S404: The terminal device receives the indication information sent by the network device.

It should be noted that there is no time sequence relationship between S404 and S403.

S405: The terminal device determines the target resource location.

Specifically, the terminal device determines the target resource location based on the indication information.

In the first implementation in S402, the indication information is specifically used to indicate a subframe included at the target resource location in the at least one invalid subframe configuration period. In this implementation, the invalid subframe configuration period is greater than the sending period of the first signal. Therefore, the terminal device may determine the target resource location based on the indication information. In this implementation, the network device and the terminal device preagree on the determining rule, the terminal device may determine, according to the determining rule preagreed between the terminal device and the network device, the at least one invalid subframe configuration period in which the target resource location is located, and then, determines the subframe included at the target resource location in the at least one invalid subframe configuration period based on the indication information.

In the second implementation in S402, in addition to being used to indicate the subframe included at the target resource location in the at least one invalid subframe configuration period, the indication information is further used to indicate whether the first signal is transmitted in the at least one invalid subframe configuration period. The terminal device may determine the target resource location based on the indication information.

In the third implementation in S402, the terminal device may determine the target resource location based on the indication information.

It should be noted that the terminal device may jointly determine the target resource location with reference to the first implementation in S402 and the third implementation in S402.

S406: The terminal device receives the first signal sent by the network device at the target resource location.

Implementation processes and technical principles of S406 and S304 are similar. Details are not described herein again.

According to the resource configuration method provided in this application, the network device generates the first signal, and the network device sends the indication information to the terminal device. The indication information is used to indicate the target resource location, and the network device sends the first signal to the terminal device at the target resource location. The target resource location includes at least one subframe. The at least one subframe is the invalid subframe. The terminal device receives the indication information sent by the network device, the terminal device determines the target resource location, and the terminal device receives the first signal sent by the network device at the target resource location. Therefore, the network device may indicate the target resource location to the terminal device based on the indication information, so that the terminal device quickly determines the target resource location, and can further successfully receive the first signal.

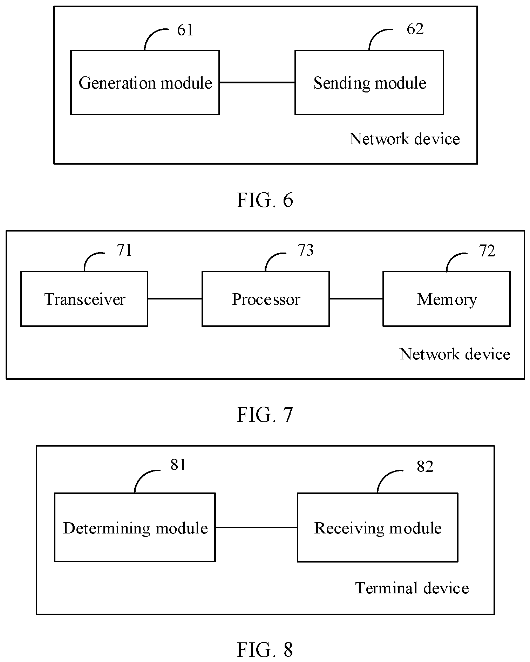

FIG. 6 is a schematic structural diagram of Embodiment 1 of a network device according to this application. As shown in FIG. 6, the network device provided in this application includes the following modules: a generation module 61 and a sending module 62.

The generation module 61 is configured to generate first information.

The sending module 62 is configured to send, at a target resource location, the first signal generated by the generation module 61 to a terminal device.

The target resource location includes at least one subframe, and the at least one subframe is an invalid subframe.

Optionally, the first signal is used to indicate at least one of the following information: a paging status of the terminal device; a change status of a system message; or a scheduling status of the terminal device.

In this application, the network device further includes a determining module, configured to determine, according to a determining rule pre-agreed between the network device and the terminal device, at least one invalid subframe configuration period in which the target resource location is located. Optionally, the determining rule is PCID mod(M/N), PCID is an identifier of a cell in which the terminal device is located, M is a sending period of the first signal, N is an invalid subframe configuration period, and both M and N are positive integers.

Further, for the network device in the embodiment in FIG. 6, the sending module 62 is further configured to send indication information to the terminal device. The indication information is used to indicate the target resource location.

Specifically, in an implementation, the indication information is used to indicate a subframe included at the target resource location in the at least one invalid subframe configuration period. The invalid subframe configuration period includes a positive integer quantity of radio frames, and different invalid subframe configuration periods have the same invalid subframe configuration.

Still further, the indication information is further used to indicate whether the first signal is transmitted in the at least one invalid subframe configuration period. Specifically, the indication information may include bitmap information. Each bit of the bitmap information is used to indicate whether the first signal is transmitted in one invalid subframe configuration period. Alternatively, the indication information includes indication signaling. The indication signaling is used to indicate a period number of an invalid subframe configuration period in which the target resource location in the first time range is located. The first signal is transmitted in a period corresponding to the period number.

In another implementation, that the indication information is used to indicate the target resource location includes any one of the following cases: the indication information is used to indicate a transmission period of the first signal; the indication information is used to indicate a resource offset of the first signal in the transmission period; or the indication information is used to indicate duration of the first signal in the transmission period.

The network device provided in this application is specifically configured to perform the method performed by the network device in the example in FIG. 3 or the example in FIG. 4. An implementation processes and a technical principle of the network device are similar to those of the network device in the example in FIG. 3 or the example in FIG. 4. Details are not described herein again.

According to the network device provided in this application, through setting, the generation module is configured to generate a first signal, and the sending module is configured to send, at the target resource location, the first signal generated by the generation module to the terminal device. The target resource location includes at least one subframe, and the at least one subframe is an invalid subframe. This implements that the network device sends the first signal in the invalid subframe. Based on a mechanism of the invalid subframe, a terminal device that does not need to receive the first signal may postpone the invalid subframe, and a terminal device that needs to receive the first signal may receive the first signal in the invalid subframe. In this way, no subframe misalignment occurs when the terminal device that does not need to receive the first signal receives downlink data or a control signal, the downlink data or the control signal may be successfully received. In addition, the terminal device that needs to receive the first signal can successfully receive the first signal at the target resource location.

FIG. 7 is a schematic structural diagram of an example of a network device not claimed in this application. As shown in FIG. 7, the network device provided in this application includes a transceiver 71, a memory 72, and a processor 73.

The memory 72 is configured to store an instruction.

The processor 73 is separately connected to the memory 72 and the transceiver 71, and is configured to execute the instruction, to perform the following steps when executing the instruction:

generating a first signal; sending the first signal to a terminal device at a target resource location by using the transceiver. The target resource location includes at least one subframe, and the at least one subframe is an invalid subframe.

Optionally, the first signal is used to indicate at least one of the following information: a paging status of the terminal device; a change status of a system message; or a scheduling status of the terminal device.

Still further, the processor 73 is further configured to instruct the transceiver 71 to send instruction information to the terminal device.

The indication information is used to indicate the target resource location.

Specifically, in an implementation, the indication information is used to indicate a subframe included at the target resource location in at least one invalid subframe configuration period. The invalid subframe configuration period includes a positive integer quantity of radio frames, and different invalid subframe configuration periods have the same invalid subframe configuration. Still further, the indication information is further used to indicate whether the first signal is transmitted in the at least one invalid subframe configuration period. Specifically, the indication information includes bitmap information. Each bit of the bitmap information is used to indicate whether the first signal is transmitted in one invalid subframe configuration period. Alternatively, the indication information includes indication signaling. The indication signaling is used to indicate a period number of an invalid subframe configuration period in which the target resource location in the first time range is located. The first signal is transmitted in a period corresponding to the period number.

In another implementation, the processor 73 is further configured to determine, according to a determining rule pre-agreed between the processor 73 and the terminal device, the at least one invalid subframe configuration period in which the target resource location is located. Optionally, the determining rule is PCID mod(M/N), PCID is an identifier of a cell in which the terminal device is located, M is a sending period of the first signal, N is an invalid subframe configuration period, and both M and N are positive integers.

In still another implementation, that the indication information is used to indicate the target resource location includes any one of the following cases: the indication information is used to indicate a transmission period of the first signal; the indication information is used to indicate a resource offset of the first signal in the transmission period; or the indication information is used to indicate duration of the first signal in the transmission period.

The network device provided in this application is specifically configured to perform the method performed by the network device in the example in FIG. 3 or the example in FIG. 4. An implementation process, a technical principle, and a technical effect of the network device are similar to those of the network device in the example in FIG. 3 or the example in FIG. 4. Details are not described herein again.

FIG. 8 is a schematic structural diagram of a terminal device according to this application. As shown in FIG. 8, the terminal device provided in this application includes the following modules: a determining module 81 and a receiving module 82.

The determining module 81 is configured to determine a target resource location.

The target resource location includes at least one subframe, and the at least one subframe is an invalid subframe.

The receiving module 82 is configured to receive a first signal sent by the network device at the target resource location determined by the determining module 81.

Optionally, the first signal is used to indicate at least one of the following information: a paging status of the terminal device; a change status of a system message; or a scheduling status of the terminal device.

The determining module 81 is further configured to determine, according to a determining rule preagreed between the determining module 81 and the network device, at least one invalid subframe configuration period in which the target resource location is located. Optionally, the determining rule is PCID mod(M/N), PCID is an identifier of a cell in which the terminal device is located, M is a sending period of the first signal, N is an invalid subframe configuration period, and both M and N are positive integers.

Further, for the terminal device in the embodiment in FIG. 8, the receiving module 82 is further configured to receive indication information sent by the network device. The indication information is used to indicate the target resource location.

Specifically, in an implementation, the indication information is used to indicate a subframe included at the target resource location in at least one invalid subframe configuration period. The invalid subframe configuration period includes a positive integer quantity of radio frames, and different invalid subframe configuration periods have the same invalid subframe configuration. Still further, the indication information is further used to indicate whether the first signal is transmitted in the at least one invalid subframe configuration period. Specifically, the indication information includes bitmap information. Each bit of the bitmap information is used to indicate whether the first signal is transmitted in one invalid subframe configuration period. Alternatively, the indication information includes indication signaling. The indication signaling is used to indicate a period number of an invalid subframe configuration period in which the target resource location in a first time range is located. The first signal is transmitted in a period corresponding to the period number.

In another implementation, that the indication information is used to indicate the target resource location includes any one of the following cases: the indication information is used to indicate a transmission period of the first signal; the indication information is used to indicate a resource offset of the first signal in the transmission period; or the indication information is used to indicate duration of the first signal in the transmission period.

The terminal device provided in this application is specifically configured to perform the method performed by the terminal device in the example in FIG. 3 or the example in FIG. 4. An implementation processes and a technical principle of the terminal device are similar to those of the terminal device in the example in FIG. 3 or the example in FIG. 4. Details are not described herein again.

According to the terminal device provided in this application, through setting, the determining module is configured to determine the target resource location. The target resource location includes at least one subframe. The at least one subframe is the invalid subframe. The receiving module is configured to receive the first signal sent by the network device at the target resource location determined by the determining module. This implements that the network device sends the first signal in the invalid subframe. Based on a mechanism of the invalid subframe, a terminal device that does not need to receive the first signal may postpone the invalid subframe, and a terminal device that needs to receive the first signal may receive the first signal in the invalid subframe. In this way, no subframe misalignment occurs when the terminal device that does not need to receive the first signal receives downlink data or a control signal, the downlink data or the control signal may be successfully received. In addition, the terminal device that needs to receive the first signal can successfully receive the first signal at the target resource location.

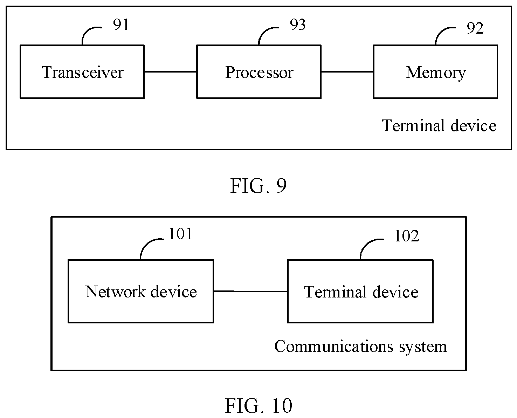

FIG. 9 is a schematic structural diagram of an example of a terminal device not claimed in this application. As shown in FIG. 9, the terminal device provided in this application includes a transceiver 91, a memory 92, and a processor 93.

The memory 92 is configured to store an instruction.

The processor 93 is separately connected to the memory 92 and the transceiver 91, and is configured to execute an instruction, to perform the following steps when executing the instruction: determining a target resource location; and receiving, by using the transceiver 91, a first signal sent by a network device at the target resource location. The target resource location includes at least one subframe, and the at least one subframe is an invalid subframe.

Optionally, the first signal is used to indicate at least one of the following information: a paging status of the terminal device; a change status of a system message; or a scheduling status of the terminal device.

Still further, the processor 93 is further configured to receive, by using the transceiver 91, indication information sent by the network device.

The indication information is used to indicate the target resource location.

Specifically, in an implementation, the indication information is used to indicate a subframe included at the target resource location in at least one invalid subframe configuration period. The invalid subframe configuration period includes a positive integer quantity of radio frames, and different invalid subframe configuration periods have the same invalid subframe configuration. Still further, the indication information is further used to indicate whether the first signal is transmitted in the at least one invalid subframe configuration period. Specifically, the indication information includes bitmap information. Each bit of the bitmap information is used to indicate whether the first signal is transmitted in one invalid subframe configuration period. Alternatively, the indication information includes indication signaling. The indication signaling is used to indicate a period number of an invalid subframe configuration period in which the target resource location in the first time range is located. The first signal is transmitted in a period corresponding to the period number.

In another implementation, the processor 93 is further configured to determine, according to a determining rule pre-agreed between the processor 93 and the network device, the at least one invalid subframe configuration period in which the target resource location is located. Optionally, the determining rule is PCID mod(M/N), PCID is an identifier of a cell in which the terminal device is located, M is a sending period of the first signal, N is an invalid subframe configuration period, and both M and N are positive integers.

In still another implementation, that the indication information is used to indicate the target resource location includes any one of the following cases: the indication information is used to indicate a transmission period of the first signal; the indication information is used to indicate a resource offset of the first signal in the transmission period; or the indication information is used to indicate duration of the first signal in the transmission period.

The terminal device provided in this application is specifically configured to perform the method performed by the terminal device in the example in FIG. 3 or the example in FIG. 4. An implementation process, a technical principle, and a technical effect of the terminal device are similar to those of the terminal device in the example in FIG. 3 or the example in FIG. 4. Details are not described herein again.

FIG. 10 is a schematic structural diagram of a communications system according to this application. As shown in FIG. 10, the communications system provided in this application includes the network device 101 in the embodiment of FIG. 6 or the example in FIG. 7 and the terminal device 102 in the embodiment of FIG. 8 or the example in FIG. 9.

This application provides a computer readable storage medium, including a computer execution instruction. The computer execution instruction is used to enable a network device to perform the method performed by the network device in the example in FIG. 3 or the example in FIG. 4.

This application provides a computer readable storage medium, including a computer execution instruction. The computer execution instruction is used to enable a terminal device to perform the method performed by the terminal device in the embodiment in FIG. 3 or the example in FIG. 4.

This application further provides a program product. The program product includes an execution instruction, and the execution instruction is stored in a computer readable storage medium. At least one processor of a network device may read the execution instruction from the readable storage medium, and the at least one processor executes the execution instruction, so that the network device implements the method performed by the network device in the example in FIG. 3 or the example in FIG. 4.

This application further provides a program product. The program product includes an execution instruction, and the execution instruction is stored in a computer readable storage medium. At least one processor of a terminal device may read the execution instruction from the readable storage medium, and the at least one processor executes the execution instruction, so that the terminal device implements the method performed by the terminal device in the example in FIG. 3 or the example in FIG. 4.

This application further provides a communications apparatus, including: a memory, configured to store computer executable program code; and a processor. When the processor executes the executable program code, the apparatus is configured to implement the method performed by the network device in the example in FIG. 3 or the example in FIG. 4.

This application further provides a communications apparatus, including: a memory, configured to store computer executable program code; and; a processor. When the processor executes the executable program code, the apparatus is configured to implement the method performed by the terminal device in the example in FIG. 3 or the example in FIG. 4.

A controller/processor configured to perform functions of the terminal device and the network device in this application may be a central processing unit (CPU), a general purpose processor, a digital signal processor (DSP), an applicationspecific integrated circuit (ASIC), a field programmable gate array (FPGA), another programmable logic device, a transistor logic device, a hardware component, or any combination thereof. The processor may implement or execute various example logical blocks, modules, and circuits described with reference to content disclosed in this application. The processor may also be a combination implementing a computing function, for example, a combination of one or more microprocessors, or a combination of the DSP and the microprocessor.

Method or algorithm steps described in combination with the content disclosed in this application may be implemented by hardware, or may be implemented by a processor by executing a software instruction. The software instruction may be formed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another. The storage medium may be any available medium accessible to a general-purpose or dedicated computer.

The scope of protection shall be defined by the appended claims.

**Claims**

1. A resource configuration method, comprising:

   determining (S303), by a terminal device, a target resource location, wherein the target resource location comprises at least one subframe, and the at least one subframe is an invalid subframe, wherein the invalid subframe is a subframe that is indicated by a network device as being unavailable to the terminal device; and receiving (S304), by the terminal device, a first signal from the network device at the target resource location;
   wherein before the determining, by a terminal device, a target resource location, the method further comprises:

   determining, by the terminal device according to a determining rule pre-agreed between the terminal device and the network device, at least one invalid subframe configuration period in which the target resource location is located;
   wherein each invalid subframe configuration period includes a positive integer quantity of radio frames, and different invalid subframe configuration periods have a same invalid subframe configuration meaning that invalid subframes have a same location in each invalid subframe configuration period.

2. The method according to claim 1, wherein before the determining, by a terminal device, a target resource location, the method further comprises:
   receiving, by the terminal device, indication information sent by the network device, wherein the indication information is used to indicate the target resource location.

3. The method according to claim 2, wherein that the indication information is used to indicate the target resource location comprises:
   the indication information is used to indicate a subframe comprised in the target resource location in the at least one invalid subframe configuration period, wherein the invalid subframe configuration period comprises a positive integer quantity of radio frames, and different invalid subframe configuration periods have a same invalid subframe configuration.

4. The method according to any one of claims 1 to 3, wherein the determining rule is PCID mod(M/N), PCID is an identifier of a cell in which the terminal device is located, M is a sending period of the first signal, N is an invalid subframe configuration period, and both M and N are positive integers.

5. A resource configuration method, comprising:

   generating, by a network device, a first signal;
   determining, by the network device according to a determining rule pre-agreed between the network device and a terminal device, at least one invalid subframe configuration period in which a target resource location is located;
   sending, by the network device, the first signal to the terminal device at the target resource location, wherein the target resource location comprises at least one subframe, and the at least one subframe is an invalid subframe, wherein the invalid subframe is a subframe that is indicated by the network device as being unavailable to the terminal device;

wherein each invalid subframe configuration period includes a positive integer quantity of radio frames, and different invalid subframe configuration periods have a same invalid subframe configuration meaning that invalid subframes have a same location in each invalid subframe configuration period.

6. The method according to claim 5, wherein before the sending, by the network device, the first signal to the terminal device at the target resource location, the method further comprises: sending, by the network device, indication information to the terminal device, wherein the indication information is used to indicate the target resource location.

7. The method according to claim 6, wherein the indication information is further used to indicate whether the first signal is transmitted within the at least one invalid subframe configuration period.

8. The method according to claim 5, wherein the determining rule is PCID mod(M/N), PCID is an identifier of a cell in which the terminal device is located, M is a sending period of the first signal, N is an invalid subframe configuration period, and both M and N are positive integers.

9. A terminal device, comprising:

a determining module (81), configured to determine a target resource location, wherein the target resource location comprises at least one subframe, and the at least one subframe is an invalid subframe, wherein the invalid subframe is a subframe that is indicated by a network device as being unavailable to the terminal device; and
a receiving module (82), configured to receive a first signal sent by the network device at the target resource location determined by the determining module;
wherein the determining module is further configured to determine, according to a determining rule pre-agreed between the terminal device and the network device, at least one invalid subframe configuration period in which the target resource location is located;
wherein each invalid subframe configuration period includes a positive integer quantity of radio frames, and different invalid subframe configuration periods have a same invalid subframe configuration meaning that invalid subframes have a same location in each invalid subframe configuration period.

10. The terminal device according to claim 9, wherein the receiving module is further configured to receive indication information sent by the network device, wherein the indication information is used to indicate the target resource location.

11. The terminal device according to claim 10, wherein that the indication information is used to indicate the target resource location comprises: the indication information is used to indicate a subframe comprised in the target resource location in the at least one invalid subframe configuration period, wherein the invalid subframe configuration period comprises a positive integer quantity of radio frames, and different invalid subframe configuration periods have a same invalid subframe configuration.

12. The terminal device according to any one of claims 9 to 11, wherein the determining rule is PCID mod(M/N), PCID is an identifier of a cell in which the terminal device is located, M is a sending period of the first signal, N is an invalid subframe configuration period, and both M and N are positive integers.

13. A network device, comprising:

a generation module, configured to generate a first signal;
a determining module, configured to determine, according to a determining rule pre-agreed between the network device and a terminal device, the at least one invalid subframe configuration period in which the target resource location is located;
a sending module, configured to send the first signal to the terminal device at the target resource location, wherein the target resource location comprises at least one subframe, and the at least one subframe is an invalid subframe, wherein the invalid subframe is a subframe that is indicated by the network device as being unavailable to the terminal device;
wherein each invalid subframe configuration period includes a positive integer quantity of radio frames, and different invalid subframe configuration periods have a same invalid subframe configuration meaning that invalid subframes have a same location in each invalid subframe configuration period.

14. The network device according to claim 13, wherein the sending module is further configured to send indication information to the terminal device, wherein the indication information is used to indicate the target resource location and is sent before the first signal is sent to the terminal device at the target resource location.

15. The network device according to claim 14, wherein the indication information is further used to indicate whether the first signal is transmitted within the at least one invalid subframe configuration period.

16. The network device according to claim 13, wherein the determining rule is PCID mod(M/N), wherein PCID is an identifier of a cell in which the terminal device is located, M is a sending period of the first signal, N is an invalid subframe configuration period, and both M and N are positive integers.

17. A computer readable storage medium, wherein the computer storage medium stores a computer readable instruction, and when a computer reads and executes the computer readable instruction, the computer is enabled to perform the method according to any one of claims 1 to 4 or claims 5 to 8.

**Patentansprüche**

1. Ressourcenkonfigurationsverfahren, das Folgendes umfasst:

Bestimmen (S303), durch eine Endgerätvorrichtung, eines Zielressourcenorts, wobei der Zielressourcenort wenigstens einen Unterrahmen umfasst und der wenigstens eine Unterrahmen ein ungültiger Unterrahmen ist, wobei der ungültige Unterrahmen ein Unterrahmen ist, der durch eine Netzwerkvorrichtung als nicht verfügbar für die Endgerätvorrichtung angegeben wird; und
Empfangen (S304), durch die Endgerätvorrichtung, eines ersten Signals von der Netzwerkvorrichtung an dem Zielressourcenort;
wobei vor dem Bestimmen, durch eine Endgerätvorrichtung, eines Zielressourcenorts, das Verfahren ferner Folgendes umfasst:

Bestimmen, durch die Endgerätvorrichtung gemäß einer Bestimmungsregel, die zwischen der Endgerätvorrichtung und der Netzwerkvorrichtung zuvor vereinbart wird, wenigstens eines ungültigen Unterrahmenkonfigurationszeitraums, in dem sich der Zielressourcenort befindet;
wobei jeder ungültige Unterrahmenkonfigurationszeitraum eine positive ganzzahlige Menge von Funkrahmen beinhaltet, und unterschiedliche ungültige Unterrahmenkonfigurationszeiträume eine gleiche ungültige Unterrahmenkonfiguration aufweisen, was bedeutet, dass ungültige Unterrahmen in jedem ungültigen Unterrahmenkonfigurationszeitraum einen gleichen Ort aufweisen.

2. Verfahren nach Anspruch 1, wobei, vor dem Bestimmen, durch eine Endgerätvorrichtung, eines Zielressourcenorts, das Verfahren ferner Folgendes umfasst:
Empfangen, durch die Endgerätvorrichtung, von Angabeinformationen, die durch die Netzwerkvorrichtung gesendet werden, wobei die Angabeinformationen verwendet werden, um den Zielressourcenort anzugeben.

3. Verfahren nach Anspruch 2, wobei die Angabeinformationen verwendet werden, um den Zielressourcenort anzugeben, das Folgendes umfasst:

die Angabeinformationen verwendet werden, um einen Unterrahmen anzugeben, der in dem Zielressourcenort in dem wenigstens einen ungültigen
Unterrahmenkonfigurationszeitraum enthalten ist, wobei der ungültige Unterrahmenkonfigurationszeitraum eine positive ganzzahlige Menge von Funkrahmen umfasst und unterschiedliche ungültige Unterrahmenkonfigurationszeiträume eine gleiche ungültige Unterrahmenkonfiguration aufweisen.

4. Verfahren nach einem der Ansprüche 1 bis 3, wobei die Bestimmungsregel PCID mod(M/N) ist, PCID ein Bezeichner einer Zelle ist, in der sich die Endgerätvorrichtung befindet, M ein Sendezeitraum des ersten Signals ist, N ein ungültiger Unterrahmenkonfigurationszeitraum ist, und sowohl M als auch N positive ganze Zahlen sind.

5. Ressourcenkonfigurationsverfahren, das Folgendes umfasst:

Erzeugen, durch eine Netzwerkvorrichtung, eines ersten Signals;
Bestimmen, durch die Netzwerkvorrichtung gemäß einer Bestimmungsregel, die zwischen der Netzwerkvorrichtung und einer Endgerätvorrichtung zuvor vereinbart wird, wenigstens eines ungültigen Unterrahmenkonfigurationszeitraums, in dem sich ein Zielressourcenort befindet;
Senden, durch die Netzwerkvorrichtung, eines ersten Signals zu einer Endgerätvorrichtung an den Zielressourcenort, wobei der Zielressourcenort wenigstens einen Unterrahmen umfasst und der wenigstens eine Unterrahmen ein ungültiger Unterrahmen ist, wobei der ungültige Unterrahmen ein Unterrahmen ist, der durch die Netzwerkvorrichtung als nicht verfügbar für die Endgerätvorrichtung angegeben wird;

wobei jeder ungültige Unterrahmenkonfigurationszeitraum eine positive ganzzahlige Menge von Funkrahmen beinhaltet, und unterschiedliche ungültige Unterrahmenkonfigurationszeiträume eine gleiche ungültige Unterrahmenkonfiguration aufweisen, was bedeutet, dass ungültige Unterrahmen in jedem ungültigen Unterrahmenkonfigurationszeitraum einen gleichen Ort aufweisen.

6. Verfahren nach Anspruch 5, wobei, vor dem Senden, durch die Netzwerkvorrichtung, des ersten Signals zu der Endgerätvorrichtung an den Zielressourcenort, das Verfahren ferner Folgendes umfasst:
Senden, durch die Netzwerkvorrichtung, von Angabeinformationen zu der Endgerätvorrichtung, wobei die Angabeinformationen verwendet werden, um den Zielressourcenort anzugeben.

7. Verfahren nach Anspruch 6, wobei die Angabeinformationen ferner verwendet werden, um anzugeben, ob das erste Signal innerhalb des wenigstens einen ungültigen Unterrahmenkonfigurationszeitraums übertragen wird.

8. Verfahren nach Anspruch 5, wobei die Bestimmungsregel PCID mod(M/N) ist, PCID ein Bezeichner einer Zelle ist, in der sich die Endgerätvorrichtung befindet, M ein Sendezeitraum des ersten Signals ist, N ein ungültiger Unterrahmenkonfigurationszeitraum ist, und sowohl M als auch N positive ganze Zahlen sind.

9. Endgerätvorrichtung, die Folgendes umfasst:

ein Bestimmungsmodul (81), das konfiguriert ist, um einen Zielressourcenort zu bestimmen, wobei der Zielressourcenort wenigstens einen Unterrahmen umfasst und der wenigstens eine Unterrahmen ein ungültiger Unterrahmen ist, wobei der ungültige Unterrahmen ein Unterrahmen ist, der durch eine Netzwerkvorrichtung als nicht verfügbar für die Endgerätvorrichtung angegeben wird; und
ein Empfangsmodul (82), das konfiguriert ist, um ein erstes Signal zu empfangen, das durch die Netzwerkvorrichtung an den Zielressourcenort gesendet wird, der durch das Bestimmungsmodul bestimmt wird;
wobei das Bestimmungsmodul ferner konfiguriert ist, um gemäß einer Bestimmungsregel, die zwischen der Endgerätvorrichtung und der Netzwerkvorrichtung zuvor vereinbart wird, wenigstens einen ungültigen Unterrahmenkonfigurationszeitraum zu bestimmen, in dem sich der Zielressourcenort befindet;
wobei jeder ungültige Unterrahmenkonfigurationszeitraum eine positive ganzzahlige Menge von Funkrahmen beinhaltet, und unterschiedliche ungültige Unterrahmenkonfigurationszeiträume eine gleiche ungültige Unterrahmenkonfiguration aufweisen, was bedeutet, dass ungültige Unterrahmen in jedem ungültigen Unterrahmenkonfigurationszeitraum einen gleichen Ort aufweisen.

10. Endgerätvorrichtung nach Anspruch 9, wobei das Empfangsmodul ferner konfiguriert ist, um Angabeinformationen zu empfangen, die durch die Netzwerkvorrichtung gesendet werden, wobei die Angabeinformationen verwendet werden, um den Zielressourcenort anzugeben.

11. Endgerätvorrichtung nach Anspruch 10, wobei die Angabeinformationen verwendet werden, um den Zielressourcenort anzugeben, die Folgendes umfasst:

die Angabeinformationen verwendet werden, um einen Unterrahmen anzugeben, der in dem Zielressourcenort in dem wenigstens einen ungültigen Unterrahmenkonfigurationszeitraum enthalten ist, wobei der ungültige Unterrahmenkonfigurationszeitraum eine positive ganzzahlige Menge von Funkrahmen umfasst und unterschiedliche ungültige Unterrahmenkonfigurationszeiträume eine gleiche ungültige Unterrahmenkonfiguration aufweisen.

12. Endgerätvorrichtung nach einem der Ansprüche 9 bis 11, wobei die Bestimmungsregel PCID mod(M/N) ist, PCID ein Bezeichner einer Zelle ist, in der sich die Endgerätvorrichtung befindet, M ein Sendezeitraum des ersten Signals ist, N ein ungültiger Unterrahmenkonfigurationszeitraum ist, und sowohl M als auch N positive ganze Zahlen sind.

13. Netzwerkvorrichtung, die Folgendes umfasst:

ein Erzeugungsmodul, das konfiguriert ist, um ein erstes Signal zu erzeugen;
ein Bestimmungsmodul, das konfiguriert ist, um gemäß einer Bestimmungsregel, die zwischen der Netzwerkvorrichtung und einer Endgerätvorrichtung zuvor vereinbart wird, den wenigstens einen ungültigen Unterrahmenkonfigurationszeitraum zu bestimmen, in dem sich der Zielressourcenort befindet;
ein Sendemodul, das konfiguriert ist, um das erste Signal zu der Endgerätvorrichtung an den Zielressourcenort zu senden, wobei der Zielressourcenort wenigstens einen Unterrahmen umfasst und der wenigstens eine Unterrahmen ein ungültiger Unterrahmen ist, wobei der ungültige Unterrahmen ein Unterrahmen ist, der durch die Netzwerkvorrichtung als nicht verfügbar für die Endgerätvorrichtung angegeben wird; wobei jeder ungültige Unterrahmenkonfigurationszeitraum eine positive ganzzahlige Menge von Funkrahmen beinhaltet, und unterschiedliche ungültige Unterrahmenkonfigurationszeiträume eine gleiche ungültige Unterrahmenkonfiguration aufweisen, was bedeutet, dass ungültige Unterrahmen in jedem ungültigen Unterrahmenkonfigurationszeitraum einen gleichen Ort aufweisen.

14. Netzwerkvorrichtung nach Anspruch 13, wobei das Sendemodul ferner konfiguriert ist, um Angabeinformationen zu der Endgerätvorrichtung zu senden, wobei die Angabeinformationen verwendet werden, um den Zielressourcenort anzugeben, und gesendet werden, bevor das erste Signal an die Endgerätvorrichtung an den Zielressourcenort gesendet wird.

15. Netzwerkvorrichtung nach Anspruch 14, wobei die Angabeinformationen ferner verwendet werden, um anzugeben, ob das erste Signal innerhalb des wenigstens einen ungültigen Unterrahmenkonfigurationszeitraums übertragen wird.

16. Netzwerkvorrichtung nach Anspruch 13, wobei die Bestimmungsregel PCID mod(M/N) ist, wobei PCID ein Bezeichner einer Zelle ist, in der sich die Endgerätvorrichtung befindet, M ein Sendezeitraum des ersten Signals ist, N ein ungültiger Unterrahmenkonfigurationszeitraum ist, und sowohl M als auch N positive ganze Zahlen sind.

17. Computerlesbares Speichermedium, wobei das computerlesbare Speichermedium computerlesbare Anweisungen speichert, und wenn ein Computer die computerlesbaren Anweisungen liest und ausführt, der Computer aktiviert wird, das Verfahren nach einem der Ansprüche 1 bis 4 oder 5 bis 8 durchzuführen.

**Revendications**

1. Procédé de configuration de ressources, comprenant :

la détermination (S303), par un dispositif terminal, d'un emplacement de ressources cible, l'emplacement de ressources cible comprenant au moins une sous-trame, et l'au moins une sous-trame étant une sous-trame non valide, la sous-trame non valide étant une sous-trame qui est indiquée par un dispositif réseau comme étant indisponible pour le dispositif terminal ; et la réception (S304), par le dispositif terminal, d'un premier signal provenant du dispositif réseau à l'emplacement de ressources cible ; avant la détermination, par un dispositif terminal, d'un emplacement de ressources cible, le procédé comprenant en outre :

la détermination, par le dispositif terminal selon une règle de détermination préalablement convenue entre le dispositif terminal et le dispositif réseau, d'au moins une période de configuration de sous-trame non valide dans laquelle se trouve l'emplacement de ressources cible ; chaque période de configuration de sous-trame non valide comportant une quantité entière positive de trames radio, et différentes périodes de configuration de sous-trame non valide ayant une même configuration de sous-trame non valide, ce qui signifie que des sous-trames non valides ont un même emplacement dans chaque période de configuration de sous-trame non valide.

2. Procédé selon la revendication 1, dans lequel, avant la détermination, par un dispositif terminal, d'un emplacement de ressources cible, le procédé comprend en outre :
la réception, par le dispositif terminal, d'informations d'indication envoyées par le dispositif réseau, les informations d'indication étant utilisées pour indiquer l'emplacement de ressources cible.

3. Procédé selon la revendication 2, dans lequel le fait que les informations d'indication sont utilisées pour indiquer l'emplacement de ressources cible comprend :
les informations d'indication sont utilisées pour indiquer une sous-trame comprise dans l'emplacement de ressources cible dans l'au moins une période de configuration de sous-trame non valide, la période de configuration de sous-trame non valide comprenant une quantité entière positive de trames radio, et différentes périodes de configuration de sous-trame non valide ayant une même configuration de sous-trame non valide.

4. Procédé selon l'une quelconque des revendications 1 à 3, dans lequel la règle de détermination est PCID mod(M/N), PCID est un identifiant d'une cellule dans laquelle se trouve le dispositif terminal, M est une période d'envoi du premier signal, N est une période de configuration de sous-trame non valide, et M et N sont tous deux des entiers positifs.

5. Procédé de configuration de ressources, comprenant :

la génération, par un dispositif réseau, d'un premier signal ;

la détermination, par le dispositif réseau selon une règle de détermination préalablement convenue entre le dispositif réseau et un dispositif terminal, d'au moins une période de configuration de sous-trame non valide dans laquelle se trouve un emplacement de ressources cible ;

l'envoi, par le dispositif réseau, du premier signal au dispositif terminal à l'emplacement de ressources cible, l'emplacement de ressources cible comprenant au moins une sous-trame, et l'au moins une sous-trame étant une sous-trame non valide, la sous-trame non valide étant une sous-trame qui est indiquée par le dispositif réseau comme étant indisponible pour le dispositif terminal ;

chaque période de configuration de sous-trame non valide comportant une quantité entière positive de trames radio, et différentes périodes de configuration de sous-trame non valide ayant une même configuration de sous-trame non valide, ce qui signifie que des sous-trames non valides ont un même emplacement dans chaque période de configuration de sous-trame non valide.

6. Procédé selon la revendication 5, dans lequel, avant l'envoi, par le dispositif réseau, du premier signal au dispositif terminal à l'emplacement de ressources cible, le procédé comprend en outre :

l'envoi, par le dispositif réseau, d'informations d'indication au dispositif terminal, les informations d'indication étant utilisées pour indiquer l'emplacement de ressources cible.

7. Procédé selon la revendication 6, dans lequel les informations d'indication sont en outre utilisées pour indiquer si le premier signal est transmis pendant l'au moins une période de configuration de sous-trame non valide.

8. Procédé selon la revendication 5, dans lequel la règle de détermination est PCID mod(M/N), PCID est un identifiant d'une cellule dans laquelle se trouve le dispositif terminal, M est une période d'envoi du premier signal, N est une période de configuration de sous-trame non valide, et M et N sont tous deux des entiers positifs.

9. Dispositif terminal, comprenant:

un module de détermination (81), configuré pour déterminer un emplacement de ressources cible, l'emplacement de ressources cible comprenant au moins une sous-trame, et l'au moins une sous-trame étant une sous-trame non valide, la sous-trame non valide étant une sous-trame qui est indiquée par un dispositif réseau comme étant indisponible pour le dispositif terminal ; et

un module de réception (82), configuré pour recevoir un premier signal envoyé par le dispositif réseau à l'emplacement de ressources cible déterminé par le module de détermination ;

le module de détermination étant en outre configuré pour déterminer, selon une règle de détermination préalablement convenue entre le dispositif terminal et le dispositif réseau, au moins une période de configuration de sous-trame non valide dans laquelle se trouve l'emplacement de ressources cible ;

chaque période de configuration de sous-trame non valide comportant une quantité entière positive de trames radio, et différentes périodes de configuration de sous-trame non valide ayant une même configuration de sous-trame non valide, ce qui signifie que des sous-trames non valides ont un même emplacement dans chaque période de configuration de sous-trame non valide.

10. Dispositif terminal selon la revendication 9, dans lequel le module de réception est en outre configuré pour recevoir des informations d'indication envoyées par le dispositif réseau, les informations d'indication étant utilisées pour indiquer l'emplacement de ressources cible.

11. Dispositif terminal selon la revendication 10, dans lequel le fait que les informations d'indication sont utilisées pour indiquer l'emplacement de ressources cible comprend :

les informations d'indication sont utilisées pour indiquer une sous-trame comprise dans l'emplacement de ressources cible dans l'au moins une période de configuration de sous-trame non valide, la période de configuration de sous-trame non valide comprenant une quantité entière positive de trames radio, et différentes périodes de configuration de sous-trame non valide ayant une même configuration de sous-trame non valide.

12. Dispositif terminal selon l'une quelconque des revendications 9 à 11, dans lequel la règle de détermination est PCID mod(M/N), PCID est un identifiant d'une cellule dans laquelle se trouve le dispositif terminal, M est une période d'envoi du premier signal, N est une période de configuration de sous-trame non valide, et M et N sont tous deux des entiers positifs.

13. Dispositif réseau, comprenant :

un module de génération, configuré pour générer un premier signal ;

un module de détermination, configuré pour déterminer, selon une règle de détermination préalablement convenue entre le dispositif réseau et un dispositif terminal, l'au moins une période de configuration de sous-trame non valide dans laquelle se trouve l'emplacement de ressources cible ;

un module d'envoi, configuré pour envoyer le premier signal au dispositif terminal à l'emplacement de ressources cible, l'emplacement de ressources cible comprenant au moins une sous-trame, et l'au moins une sous-trame étant une sous-trame non valide, la sous-trame non valide étant une sous-trame qui est indiquée par le dispositif réseau comme étant indisponible pour le dispositif terminal ;

chaque période de configuration de sous-trame non valide comportant une quantité entière positive de trames radio, et différentes périodes de configuration de sous-trame non valide ayant une même configuration de sous-trame non valide, ce qui signifie que des sous-trames non valides ont un même emplacement dans chaque période de configuration de sous-trame non valide.

14. Dispositif réseau selon la revendication 13, dans lequel le module d'envoi est en outre configuré pour envoyer des informations d'indication au dispositif terminal, les informations d'indication étant utilisées pour indiquer l'emplacement de ressources cible et étant envoyées avant l'envoi du premier signal au dispositif terminal à l'emplacement de ressources cible.

15. Dispositif réseau selon la revendication 14, dans lequel les informations d'indication sont en outre utilisées pour indiquer si le premier signal est transmis pendant l'au moins une période de configuration de sous-trame non valide.

16. Dispositif réseau selon la revendication 13, dans lequel la règle de détermination est PCID mod(M/N), PCID étant un identifiant d'une cellule dans laquelle se trouve le dispositif terminal, M étant une période d'envoi du premier signal, N étant une période de configuration de sous-trame non valide, et M et N étant tous deux des entiers positifs.

17. Support de stockage lisible par ordinateur, dans lequel le support de stockage lisible par ordinateur stocke des instructions lisibles par ordinateur, et lorsqu'un ordinateur lit et exécute les instructions lisibles par ordinateur, l'ordinateur est capable d'effectuer le procédé selon l'une quelconque des revendications 1 à 4 ou des revendications 5 à 8.

Invalid subframe
configuration

Radio frame

1011101111

Invalid
subframe

When downlink data is
transmitted

Transport block TB

Postponed
subframe

FIG. 1

12    11    13

NB-IoT system

FIG. 2

```
┌──────────┐                                          ┌──────────┐
│ Network  │                                          │ Terminal │
│  device  │                                          │  device  │
└────┬─────┘                                          └────┬─────┘
     │                                                     │
┌────┴──────────────────────────────────┐                 │
│ S301. The network device generates a   │                 │
│              first signal              │                 │
└────┬───────────────────────────────────┘                │
     │                                                     │
     │  S302. The network device sends the first signal to │
     │   the terminal device at a target resource location │
     │────────────────────────────────────────────────────>│
     │                                                     │
     │              ┌──────────────────────────────────────┴────┐
     │              │ S303. The terminal device determines the   │
     │              │        target resource location            │
     │              └──────────────────────────────────────┬────┘
     │                                                     │
     │              ┌──────────────────────────────────────┴────┐
     │              │ S304. The terminal device receives the     │
     │              │ first signal sent by the network device at │
     │              │       the target resource location         │
     │              └──────────────────────────────────────┬────┘
     │                                                     │
```

FIG. 3

```
┌──────────┐                                          ┌──────────┐
│ Network  │                                          │ Terminal │
│  device  │                                          │  device  │
└────┬─────┘                                          └────┬─────┘
     │                                                     │
┌────┴──────────────────────────────────┐                 │
│ S401. The network device generates a   │                 │
│              first signal              │                 │
└────┬───────────────────────────────────┘                │
     │                                                     │
     │      S402. The network device sends indication      │
     │        information to the terminal device           │
     │────────────────────────────────────────────────────>│
     │                                                     │
     │   S403. The network device sends the first signal to│
     │    the terminal device at a target resource location│
     │────────────────────────────────────────────────────>│
     │                                                     │
     │             ┌───────────────────────────────────────┴─────┐
     │             │ S404. The terminal device receives the       │
     │             │       indication information sent by the     │
     │             │              network device                  │
     │             └───────────────────────────────────────┬─────┘
     │                                                     │
     │             ┌───────────────────────────────────────┴─────┐
     │             │ S405. The terminal device determines the     │
     │             │            target resource location          │
     │             └───────────────────────────────────────┬─────┘
     │                                                     │
     │             ┌───────────────────────────────────────┴─────┐
     │             │ S406. The terminal device receives the       │
     │             │ first signal sent by the network device at   │
     │             │        the target resource location          │
     │             └───────────────────────────────────────┬─────┘
     │                                                     │
```

FIG. 4

01110111110111011111

FIG. 5A

Subframes actually occupied within a first
signal transmission period of 20 ms

Bitmap information: 1111011110

FIG. 5B

FIG. 5C

DRX cycle for paging, 10.24s

640 ms

First signal    Paging signal

40 ms

Bitmap information
0100...00 indicates an invalid
subframe configuration
period in which a target
resource location is located

Invalid subframe configuration period

Current invalid configuration: 01110011100110...00

FIG. 5D

EP 3 664 493 B1

DRC cycle for paging, 10.24s

640 ms

First signal    Paging signal

40 ms

0    1    2    ...    15

0001 indicates an invalid subframe configuration period in which a target resource location is located

Invalid subframe configuration period

Current invalid configuration: 01110011100110...00

FIG. 5E

EP 3 664 493 B1

61

Generation module

62

Sending module

Network device

FIG. 6

71

Transceiver

73

Processor

72

Memory

Network device

FIG. 7

81

Determining module

82

Receiving module

Terminal device

FIG. 8

24

| Transceiver | Processor | Memory |
|---|---|---|

91     93     92

Terminal device

FIG. 9

| Network device | Terminal device |
|---|---|

101     102

Communications system

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUAWEI et al.** On 'wake-up signal' for paging and connected-mode DRX. *R1-1707021*

- **QUALCOMM INCORPORATED.** OTDOA positioning reference signal. *R1-1702547*